# EUROPEAN PATENT APPLICATION

(11) **EP 2 829 968 A1**
(43) Date of publication of application: **28.01.2015**
(21) Application number: 14174718.8
(22) Date of filing: 27.06.2014
(51) Int. Cl.: G06F 3/06

(54) **Storage controller, controlling program, and method for controlling**

(30) Priority: 24.07.2013 JP 2013153513
(71) Applicant: FUJITSU LIMITED, Kawasaki-shi, Kanagawa 211-8588 (JP)
(72) Inventor: Fujita, Daisuke, Ishikawa, 921-8611 (JP); Hamamoto, Eiji, Ishikawa, 921-8611 (JP); Osanai, Hisashi, Ishikawa, 921-8611 (JP); Motoi, Shunsuke, Ishikawa, 921-8611 (JP); Yasumoto, Shuko, Ishikawa, 921-8611 (JP); Furuya, Masanori, Kanagawa, 211-8588 (JP)
(74) Representative: Hoffmann Eitle

(57) **Abstract**

A storage controller (10) that generates multiple versions of a snapshot of a storing device (21) and that includes a first calculator (112) that counts a first number of segments updated in a first snapshot that is to be deleted among the multiple versions of the snapshot but not updated in a second snapshot of a successive version to the first snapshot, a second calculator (113) that counts a second number of segments updated in the second snapshot, and a determining processor (114) that determines, when the first number is the second number or more, that the second snapshot and the first snapshot are a merging source and a merging destination in merging processing, respectively, and determines, when the first number is less than the second number, that the first snapshot and the second snapshot are the merging source and the merging destination, respectively.

## Description

### FIELD

The embodiments discussed herein are related to a storage controller, a controlling program, and a method of controlling.

### BACKGROUND

One of the known techniques of data backup in a storage apparatus generates multiple versions of a snapshot of the storage device. Some storage apparatuses having a function of generating a snapshot have an additional function of deleting some of multiple versions of a snapshot through merging with the intension of increasing an available storage volume.

It is not allowed to simply delete a midcourse-version snapshot, which has differential data. For the above, in deleting a snapshot, data included in the snapshot that is to be deleted is compared with data included in the snapshot of the next version of the snapshot to be deleted and the differential data is merged from the snapshot to be deleted into the next-version snapshot.

### CITATION LIST

### PATENT LITERATURE

[Patent Literature 1] Japanese Laid-open Patent Publi cation No. 2005-235058
[Patent Literature 2] Japanese Laid-open Patent Publi cation No. 2009-123187
[Patent Literature 3] Japanese Laid-open Patent Publi cation No. 2009-146389
[Patent Literature 4] Japanese Laid-open Patent Publication No. 2010-26939

### SUMMARY OF THE INVENTION

### PROBLEMS TO BE SOLVED BY THE INVENTION

Unfortunately, when the volume of the differential data is large, the above merging needs to deal with a large copy volume to increase I/O load. This also arises another problem that takes a long time to regain an available data volume even after the deletion of the snapshot is started.

It is an object of the present disclosure to efficiently merge snapshots.

In addition to the above object, it is another object of the present invention to obtain effects that are derived the configurations of embodiments will be detailed below but that are not achieved by conventional techniques.

### MEANS TO SOLVE THE PROBLEMS

According to an aspect of the embodiments, a storage controller that generates a plurality of versions of a snapshot of a storage device, the storage controller including: a first calculator that counts a first number of segments that are updated in a first snapshot that is to be deleted among the plurality of versions of the snapshot but that are not updated in a second snapshot of a successive version to the first snapshot; a second calculator that counts a second number of segments that are updated in the second snapshot; and a determining processor that determines, when the first number is the second number or more, that the second snapshot and the first snapshot are a merging source and a merging destination in merging processing, respectively, and determines, when the first number is less than the second number, that the first snapshot and the second snapshot are the merging source and the merging destination in the merging processing, respectively, the merging source being merged into the merging destination.

### EFFECT OF THE INVENTION

The storage controller disclosed herein can efficiently carry out merging on snapshots.

### BRIEF DESCRIPTION OF DRAWINGS

FIG. 1 is a schematic diagram illustrating the functional configuration of a storage system according to an example of a first embodiment;
FIG. 2 is a diagram illustrating an example of merging processing in a storage system of an example of the first embodiment;
FIG. 3 is a diagram illustrating an example of merging processing in a storage system of an example of the first embodiment;
FIG. 4 is a diagram illustrating an example of merging processing in a storage system of an example of the first embodiment;
FIG. 5 is a diagram illustrating an example of merging processing in a storage system of an example of the first embodiment;
FIG. 6 is a diagram illustrating an example of merging processing in a storage system of an example of the first embodiment;
FIG. 7 is a diagram illustrating an example of merging processing in a storage system of an example of the first embodiment;
FIG. 8 is a diagram illustrating an example of merging processing in a storage system of an example of the first embodiment;
FIG. 9 is a diagram illustrating an example of merging processing in a storage system of an example of the first embodiment;
FIG. 10 is a diagram illustrating an example of merging processing in a storage system of an example of the first embodiment;
FIG. 11 is a diagram illustrating an example a device number managing table of an example of the first embodiment;
FIG. 12 is a flow diagram illustrating a succession of procedural steps of merging processing in an example of the first embodiment;
FIG. 13 is a schematic diagram illustrating the functional configuration of a storage system according to an example of a second embodiment;
FIGs . 14A and 14B are diagrams illustrating a manner of generating a snapshot in a storage system of an example of the second embodiment;
FIGs. 15A and 15B are diagrams illustrating a manner of reading a snapshot in a storage system of an example of the second embodiment;
FIG. 16A is a diagram illustrating an example of an LBA conversion table in a storage system of an example of the second embodiment;
FIG. 16B is a diagram illustrating an example of an updated bitmap in a storage system of an example of the second embodiment;
FIG. 17 is a diagram illustrating an example of merging processing in a storage system of an example of the second embodiment;
FIG. 18 is a diagram illustrating an example of a write process into a disk being to be merged and undergoing merging processing in a storage system of an example of the second embodiment;
FIG. 19 is a diagram illustrating an example of a write process into an operating disk undergoing merging processing in a storage system of an example of the second embodiment;
FIG. 20 is a diagram illustrating an example of a disk exchanging processing in a storage system of an example of the second embodiment;
FIG. 21 is a flow diagram illustrating a succession of procedural steps of determining a merging direction in a storage system of an example of the second embodiment;
FIG. 22 is a flow diagram illustrating a succession of procedural steps of a write process in merging processing in an example of the second embodiment;
FIG. 23 is a flow diagram illustrating a succession of procedural steps of a read process in merging processing in an example of the second embodiment;
FIG. 24 is a flow diagram illustrating a succession of procedural steps of a write process into an operating disk in merging processing in an example of the second embodiment; and
FIG. 25 is a flow diagram illustrating a succession of procedural steps of a disk exchanging process in a storage system of an example of the second embodiment.

### DESCRIPTION OF EMBODIMENTS

Hereinafter, description will now be made in relation to a storage controller, a controlling program, and a method of controlling according to a first embodiment with reference to the accompanying drawings. However, it should be noted that the following embodiments are merely examples and do not intend to exclude another modification and application of techniques that are not mentioned in the embodiments. This means that various changes and modifications to the embodiments can be suggested without departing from the gist thereof.

The drawings do not illustrate therein all the functions and elements included in the embodiments. The embodiments may include additional functions and elements to those illustrated in the accompanying drawings.

Hereinafter, like reference numbers designate similar parts and elements throughout the drawings, so repetitious description is omitted here.

### (A) first embodiment:

### (A-1) system configuration:

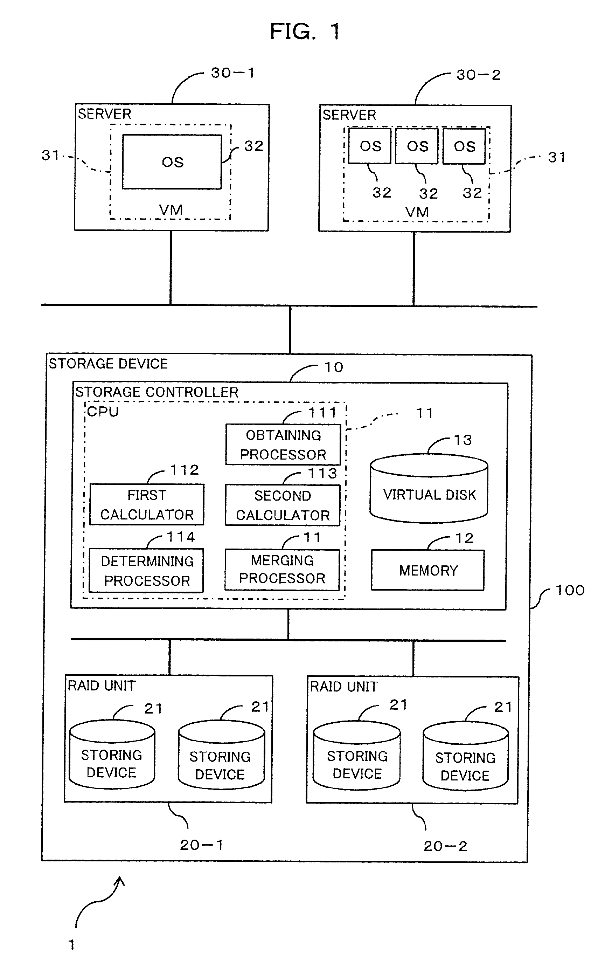

FIG. 1 is a diagram schematically illustrating the functional configuration of a storage system according to an example of the first embodiment.

As illustrated in FIG. 1, the storage system 1 of an example of the first embodiment includes a storage device 100 and servers 30-1 and 30-2, which are communicably connected to one another.

Hereinafter, one of multiple servers is specified by the reference number 30-1 or 30-2, but an arbitrary server is represented by the reference number 30.

Each server 30 is a computer having a server function. In the example of FIG. 1, the storage system 1 includes two servers 30-1 and 30-2, but may alternatively include one, three of more servers 30.

Each server 30 includes a non-illustrated memory, on which a Virtual Machine (VM) 31 is expanded. The expanded VM 31 is executed on a non-illustrated Central Processing Unit (CPU).

In the example of FIG. 1, the VM 31 of the server 30-1 includes a single Operating system (OS) 32 while the VM 31 of the server 30-2 includes three OSs 32.

Each OS 32 is system software that achieves basic functions, such as hardware management. The number of OSs32 included in each VM 31 is not limited to those illustrated in FIG. 1, but each VM 31 satisfactorily includes one or more OSs 32.

The storage device 100 includes a storage controller 10, and redundant Arrays of Independent Disks (RAID) units 20-1 and 20-2, which are communicably connected to one another as illustrated in FIG. 1.

Hereinafter, one of multiple RAID units is specified by the reference number 20-1 or 20-2, but an arbitrary RAID unit is represented by the reference number 20.

Each RAID unit 20 includes multiple storing devices 21 and virtually manages these storing device 21 as a single storing device. The number of RAID units 20 included in the storage device 100 is not limited to that illustrated in FIG. 1, but the storage device 100 may include one, three, or more RAID units 20.

Each storing device 21 is a known device that readably and writably stores data, and is exemplified by a Hard Disk Drive (HDD) or a Solid State Drive (SSD). The number of storing devices 21 included in each RAID unit 20 is not limited to those illustrated in FIG. 1, but each RAID unit 20 may include one, three, or more storing devices 21.

The storage controller 10 includes a CPU (computer) 11 and a memory 12. As illustrated in the example of FIG. 1, the storage controller 10 generates a virtual disk 13, and virtualizes the configuration of the storing devices 21 by associating the virtual disk 13 and the storing devices 21 using any known method.

The memory 12 is a storing device including a Read Only Memory (ROM) and a Random Access Memory (RAM). Programs such as a Basic Input/Output System (BIOS) are stored in the ROM of the memory 12. Software programs stored in the memory 12 are appropriately read into and executed in the CPU 11. The RAM of the memory 12 is used as a primary recording memory or a working memory.

The CPU 11 is a processor that carries out various controls and calculations, and achieves various functions by executing the OS and programs stored in a non- illustrated storing device included in the storage controller 10. Namely, as illustrated in FIG. 1, the CPU 11 function as an obtaining processor 111, a first calculator 112, a second calculator 113, a determining processor 114, and a merging processor 115.

The program (controlling program) that achieves the functions of the obtaining processor 111, the first calculator 112, the second calculator 113, the determining processor 114, and the merging processor 115 are provided in the form of being recorded in a tangible and non- transient computer-readable storage medium, such as a flexible disk, a CD (e.g. , CD-ROM, CD-R, and CD-RW) , a DVD (DVD-ROM, DVD-RAM, DVD-R, DVD+R, DVD-RW, DVD+RW, and HD DVD) , Blu-ray disk, a magnetic disk, an optical disk, and an magneto-optical disk. A computer reads the program from the recording medium using a non-illustrated medium reader and stores the read program in an internal or external storage device for future use . Alternatively, the program may be recorded in a recording device (recording medium), such as a magnetic disk, an optical disk, or a magneto-optical disk, and may be provided from the recording device to the computer via a communication path.

Further alternatively, in achieving the functions of the obtaining processor 111, the first calculator 112, the second calculator 113, the determining processor 114, and the merging processor 115, the program stored in a non-illustrated internal storage device is executed by the microprocessor (corresponding to the CPU 11 in the first embodiment) of the computer. At that time, the computer may read the program stored in the recording medium and may execute the program.

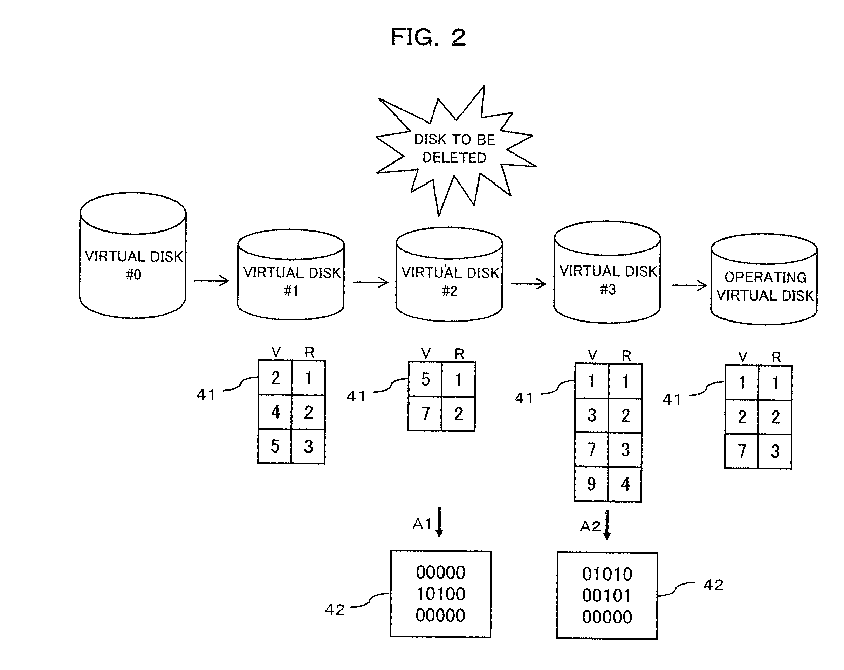

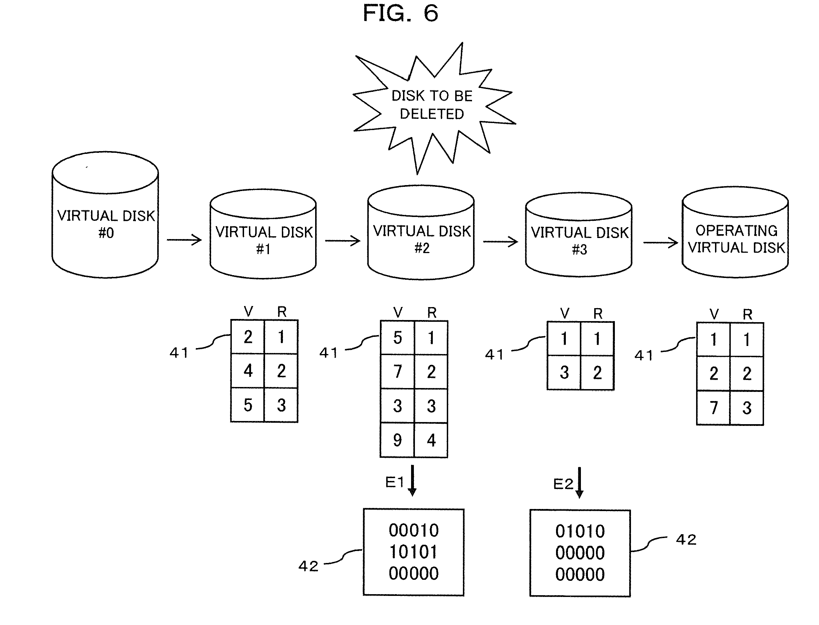

FIGs. 2-10 are diagrams illustrating examples of merging processing in the storage system according to an example of the first embodiment. Specifically, FIGs. 2-5 illustrate an example of merging processing when a snapshot to be deleted is the merging source; and FIGs. 6-10 illustrating an example of merging processing when a snapshot to be deleted is the merging destination.

In the examples of FIGs. 2-10, the storage controller 10 generates virtual disks #0-#3 and an operating virtual disk that can be regarded as snapshots.

The snapshot function of the first embodiment generates a snapshot (differential snapshot) by writing the differential data using the technique of Copy-On-write.

A virtual disk #0 corresponds to the original disk and therefore stores therein the entire data that the storing devices 21 contains when the virtual disk #0 is generated. A virtual disk #1 is a differential disk and stores therein data (i.e., the differential data from the virtual disk #0) different from data stored in the virtual disk #0, which is the one-version previous-version (parent-version) disk, at the time of generating the virtual disk #1. Likewise the virtual disk #1, the virtual disks #2 and #3 are differential disks and contain differential data from the respective parent-version disks (previous-version disks) at the time generating the virtual disks #2 and #3 , respectively. These virtual disks #0 to #3 are read-only disks and are set to be unwritable.

The operating virtual disk contains data (differential data from the virtual disk #3) different from data stored in the parent-version virtual disk #3 thereof. The operating virtual disk contains the latest data that the storing devices 21 store, and the servers 30 carry out various transactions using the operating virtual disk. The operating virtual disk is a read-write disk set to be readable and writable.

The snapshot function of the first embodiment generates the virtual disks #0, #1, #2, and #3, and the operating virtual disk from the oldest. In generating another snapshot, the storage controller 10 regards the operating virtual disk as the latest-version snapshot and generates a new operating virtual disk.

For example, if the virtual disk #3 stores therein data that the operating virtual disk does not store therein when the server 30 reads the operating virtual disk, the server 30 reads the data from the virtual disk #3. Furthermore, if the virtual disk #2 stores therein data that the virtual disk #3 does not store therein, the server 30 reads the data from the virtual disk #2.

In the management segments of the disks (i.e., the virtual disks #1-#3 and the operating virtual disk) except for the original disk, i.e., the virtual disk #0, respective differential data managing maps 41 as depicted in FIG. 2 are stored. Each differential data managing map 41 associates a logical address (represented by "V" in FIG. 2) of differential data stored in the corresponding disk with a physical address (represented by "R" in FIG. 2) where the differential data is actually stored in a storing device 21. For example, the differential data managing map 41 of the virtual disk #1 indicates that the differential data from the virtual disk #0 is stored in logical addresses "2", "4", and "5", which are stored in association with the physical addresses "1", "2", and "3" in the storing device 21, respectively. A logical address is associated with a physical address in the differential data managing map 41 of each virtual disk when the virtual disk being used as the operating virtual disk is updated.

An updated bitmap 42 depicted in FIG. 2 is generated on the basis of the differential data managing map 41. Specifically, a flag "1" is set for a bit corresponding to a logical address stored in the differential data managing map 41.

Hereinafter, description will now be made in relation to the functions of the obtaining processor 111, the first calculator 112, the second calculator 113, the determining processor 114, and the merging processor 115 included in the CPU 11 illustrated in FIG. 1.

The obtaining processor 111 obtains (generates) the updated bitmap 42 on the basis of the differential data managing map 41.

The first calculator 112 calculates (counts) the number of segments that are updated in a first snapshot that is to be deleted among multiple versions of the snapshot but are not updated in a second snapshot being a successive version to the first snapshot, and the number calculated by the first calculator 112 is regarded as the first number of segments. In an example of the first embodiment, the second snapshot is the one-version later than the first snapshot.

The second calculator 113 calculates (counts) the number of segments updated in the second snapshot, and the number calculated by the second calculator 113 is regarded as the second number of segments.

When the first number is equal to or more than the second number, the determining processor 114 determines that the second snapshot and the first snapshot to be a merging source and a merging destination of merging process, respectively. Here, the merging source is to be merged into the merging destination. Besides, when the first number is less than the second number, the determining processor 114 determines the first snapshot and the second snapshot to be the merging source and the merging destination of the merging processing, respectively.

The merging processor 115 carries out the merging process by writing the data of a snapshot determined to be the merging source into the snapshot determined to be the merging destination and then deleting the snapshot of the merging source.

Hereinafter, description will now be made in relation to the detailed functions of the obtaining processor 111, the first calculator 112, the second calculator 113, the determining processor 114, and the merging processor 115 with reference to FIGs. 2-10.

First of all, processing performed when a snapshot to be deleted is determined to be the merging source will now be described with reference to FIGs. 2-5.

In the example depicted in FIG. 2, the virtual disk #2, which is a midcourse-version snapshot, is assigned to be a snapshot to be deleted. A snapshot is deleted when, for example, the operator makes an action or a predetermined cyclic period has come.

The obtaining processor 111 obtains (generates) the updated bitmap 42 based on the differential data managing map 41 of the virtual disk #2 that is to be deleted (see step A1). In the example illustrated in FIG. 2, since the logical addresses where differential data are stored are "5" and "7" in the differential data managing map 41 of the virtual disk #2, the obtaining processor 111 sets a flag "1" in the fifth and seventh bits in the updated bitmap 42.

Additionally, the obtaining processor 111 obtains (generates) another updated bitmap 42 based on the differential data managing map 41 of the virtual disk #3 (see step A2), which is the next version (child version) of the virtual disk #2 to be deleted. In the example illustrated in FIG. 2, since the logical addresses where differential data are stored are "1", "3", "7" and "9" in the differential data managing map 41 of the virtual disk #3, the obtaining processor 111 sets a flag "1" in the first, third, seventh, and ninth bits in the updated bitmap 42.

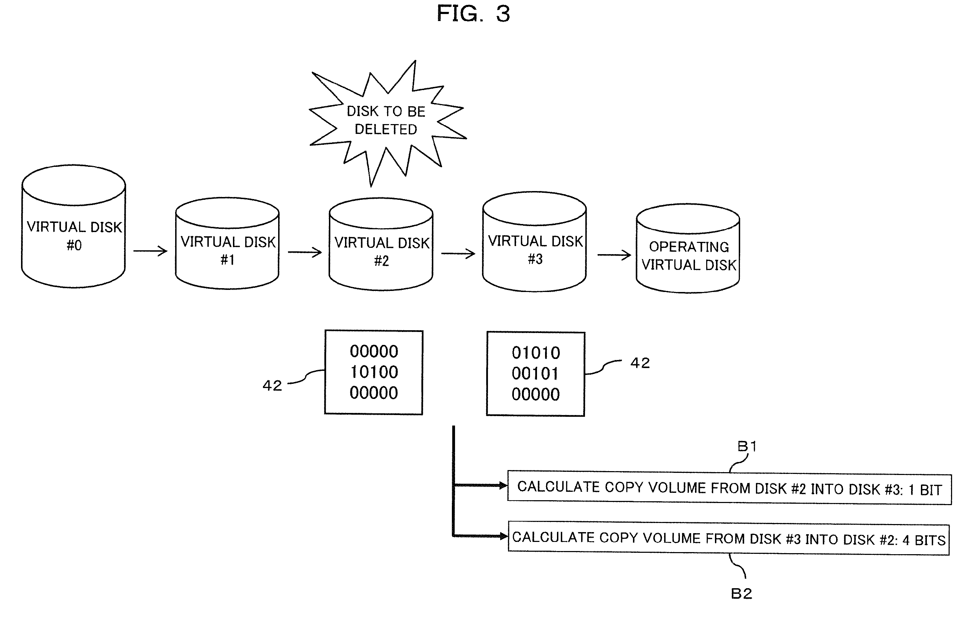

As illustrated in FIG. 3, the first calculator 112 calculates the copy data volume from the virtual disk #2 into the virtual disk #3 on the basis of the updated bitmaps 42 (see step B1). The copy data volume calculated here is data volume that is updated in the virtual disk #2 but that is not overwritten in virtual disk #3. Specifically, the first calculator 112 calculates the number of bits that are "1" in the updated bitmap 42 of the virtual disk #2 and that are "0" in the updated bitmap 42 of the virtual disk #3. In the example of FIG. 3, the first calculator 112 calculates one bit to be the copy data volume from the virtual disk #2 into the virtual disk #3.

The second calculator 113 calculates the copy data volume from the virtual disk #3 to the virtual disk #2 on the basis of the updated bitmap 42 (see step B2). The copy data volume calculated here corresponds to data volume updated in the virtual disk #3. Specifically, the second calculator 113 calculates the number of bits that are "1" in the updated bitmap 42 of the virtual disk #3. In the example of FIG. 3, the second calculator 113 calculates four bits to be the copy data volume from the virtual disk #3 to the virtual disk #2.

The determining processor 114 determines the direction of copying the differential data on the basis of the copy data volumes calculated in the steps B1 and B2.

In the example of FIG. 3, since the value (one bit) corresponding to the copy data volume calculated in the step B1 is less than the value (four bits) corresponding to the copy data volume calculated in step B2, the determining processor 114 determines that the differential data in the virtual disk #2 is to be copied into the virtual disk #3.

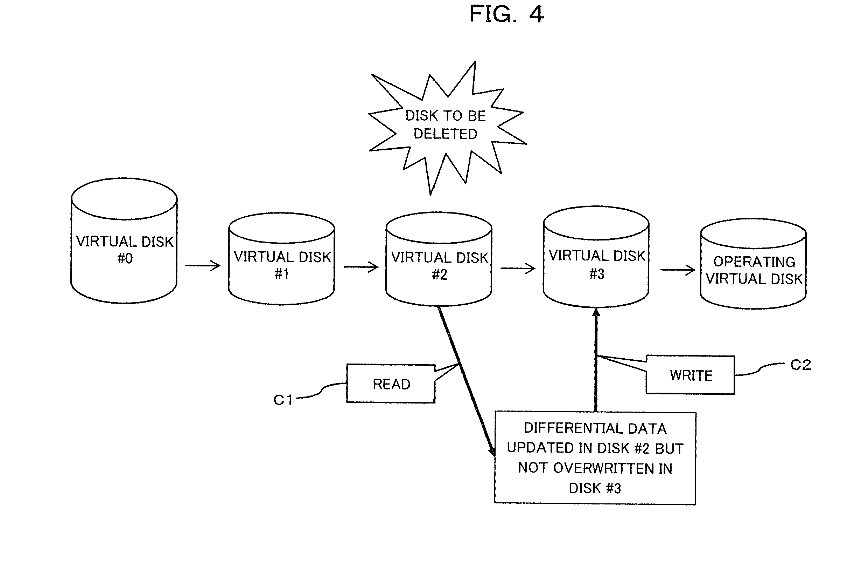

As depicted in FIG. 4, the merging processor 115 reads differential data that is updated in virtual disk #2 and that is not overwritten in the virtual disk #3 from the virtual disk #2 (see step C1) according to the determination made by the determining processor 114. The merging processor 115 caches the read differential data into, for example, the memory 12.

The merging processor 115 writes differential data that is updated in the virtual disk #2 and that is not overwritten in virtual disk #3 into the virtual disk #3 (see step C2).

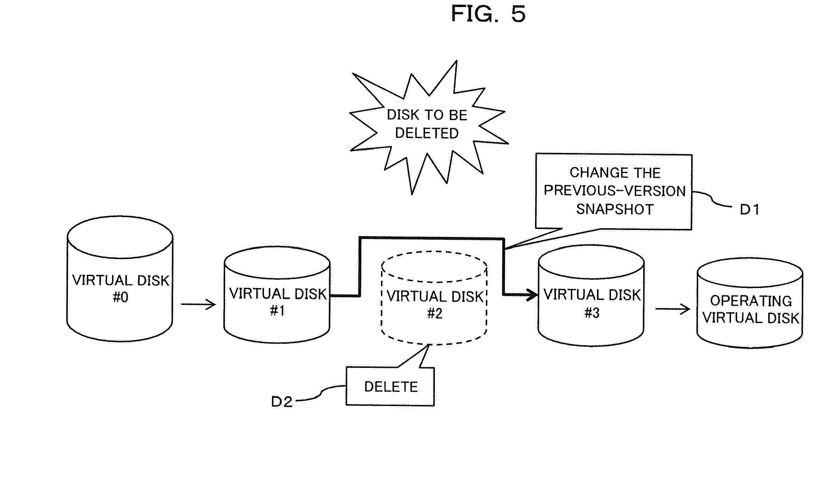

As depicted in FIG. 5, the merging processor 115 changes the previous-version snapshot to the virtual disk #3 from the virtual disk #2 to the virtual disk #1 (see step D1) and then deletes the virtual disk #2 (see step D2).

Next, processing performed when a snapshot to be deleted is determined to be the merging destination will now be described with reference to FIGs. 6-10.

Also in the example depicted in FIG. 6, the virtual disk #2, which is a midcourse-version snapshot, is assigned to be a snapshot to be deleted.

The obtaining processor 111 obtains (generates) the updated bitmap 42 based on the differential data managing map 41 of the virtual disk #2 that is to be deleted (see step E1). In the example illustrated in FIG. 6, since the logical addresses where differential data are stored are "3", "5", "7", and "9" in the differential data managing map 41 of the virtual disk #2, the obtaining processor 111 sets a flag "1" in the third, fifth, seventh, and ninth bits in the updated bitmap 42.

Additionally, the obtaining processor 111 obtains (generates) another updated bitmap 42 based on the differential data managing map 41 of the virtual disk #3, which is the next version of the virtual disk #2 that is to be deleted (see step E2). In the example illustrated in FIG. 6, since the logical addresses where differential data are stored are "1" and "3" in the differential data managing map 41 of the virtual disk #3, the obtaining processor 111 sets a flag "1" in the first and third bits in the updated bitmap 42.

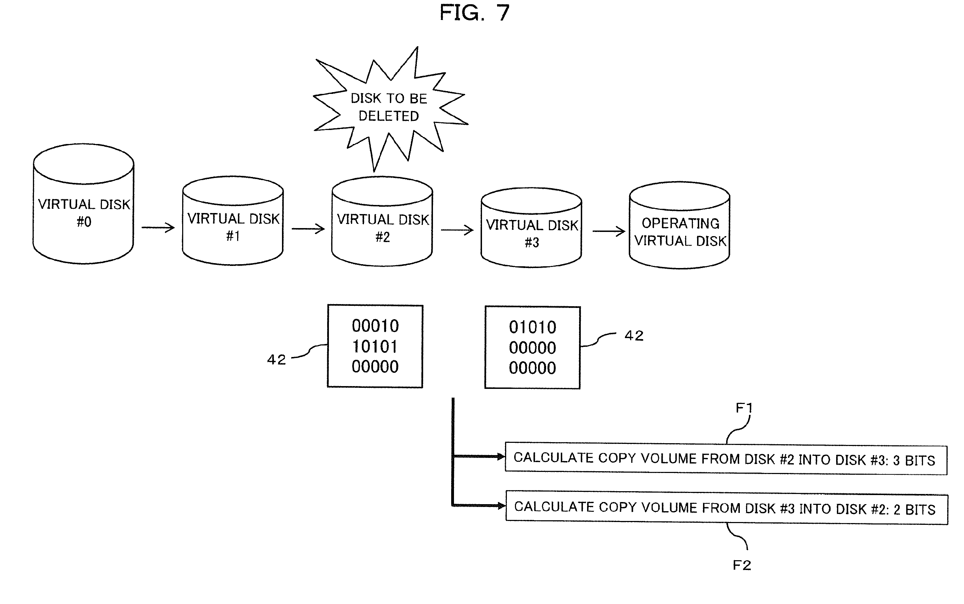

As illustrated in FIG. 7, the first calculator 112 calculates the copy data volume from the virtual disk #2 into the virtual disk #3 on the basis of the updated bitmaps 42 (see step F1). The copy data volume calculated here is data volume that is updated in the virtual disk #2 but that is not overwritten in virtual disk #3. Specifically, the first calculator 112 calculates the number of bits that are "1" in the updated bitmap 42 of the virtual disk #2 and that are "0" in the updated bitmap 42 of the virtual disk #3. In the example of FIG. 7, the first calculator 112 calculates three bits to be the copy data volume from the virtual disk #2 into the virtual disk #3.

The second calculator 113 calculates the copy data volume from the virtual disk #3 to the virtual disk #2 on the basis of the updated bitmap 42 (see step F2). The copy data volume calculated here corresponds to the data volume updated in the virtual disk #3. Specifically, the second calculator 113 calculates the number of bits "1" in the updated bitmap 42 of the virtual disk #3. In the example of FIG. 7, the second calculator 113 calculates two bits to be the copy data volume from the virtual disk #3 to the virtual disk #2.

The determining processor 114 determines the direction of copying the differential data on the basis of the copy data volumes calculated in the steps F1 and F2.

In the example of FIG. 7, since the value (three bits) corresponding to the copy data volume calculated in the step F1 is more than the value (two bits) corresponding to the copy data volume calculated in step F2, the determining processor 114 determines that the differential data in the virtual disk #3 is to be copied into the virtual disk #2.

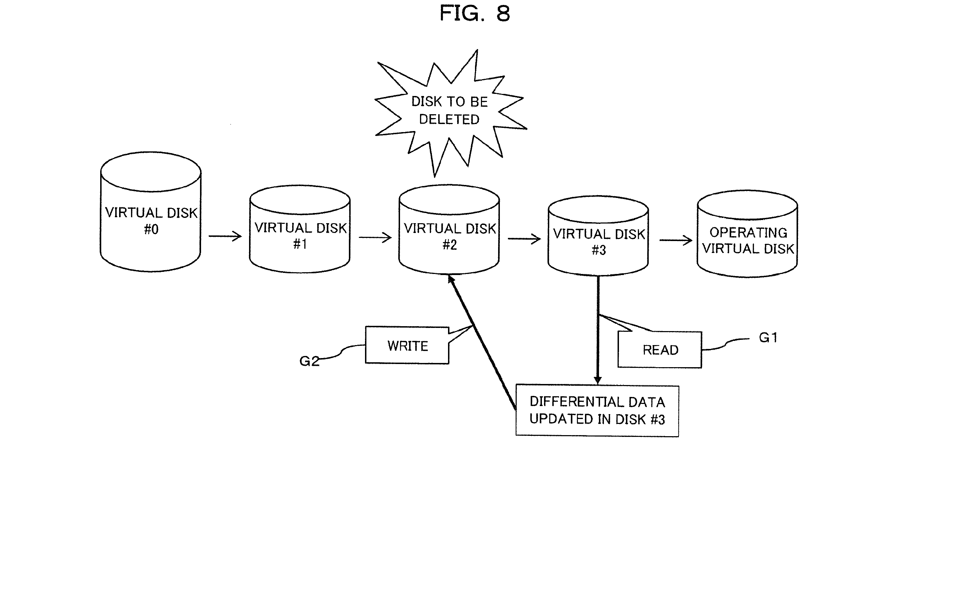

As depicted in FIG. 8, the merging processor 115 reads differential data present in the virtual disk #3 (see step G1). The merging processor 115 caches the read differential data into, for example, the memory 12.

The merging processor 115 writes the read differential data into the virtual disk #2 (see step G2).

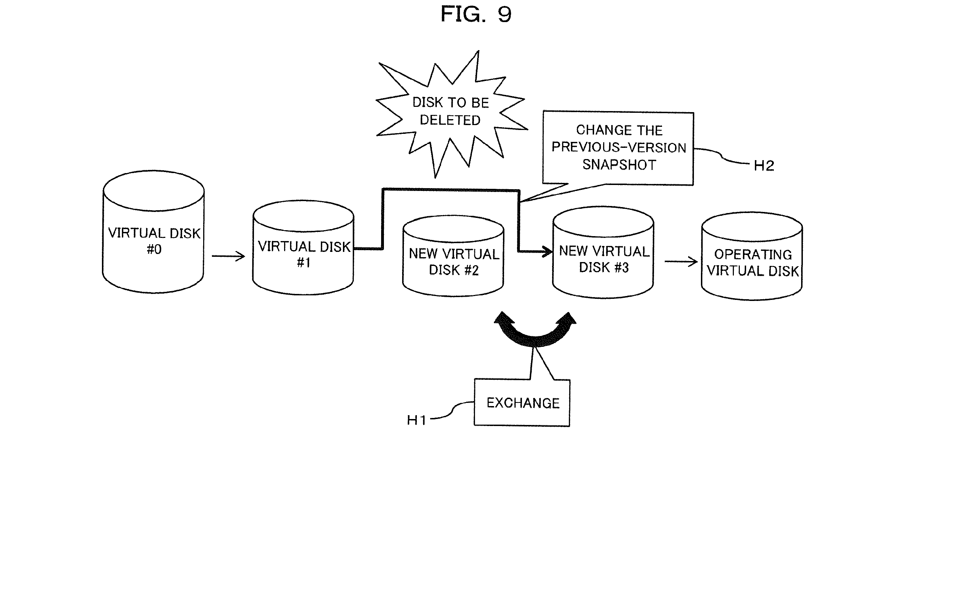

As illustrated in FIG. 9, the merging processor 115 exchanges the virtual disk #2 to be deleted (i.e., the merging destination) with the next-version virtual disk #3 (i.e. , the merging source) (see step H1). Namely, the merging processor 115 regards the virtual disk #2 as the virtual disk #3 and regards the virtual disk #3 as the virtual disk #2.

Furthermore, the merging processor 115 changes the previous-version (parent-version) virtual disk of the virtual disk #3 (the previous virtual disk #2) to the virtual disk #1 (see step H2).

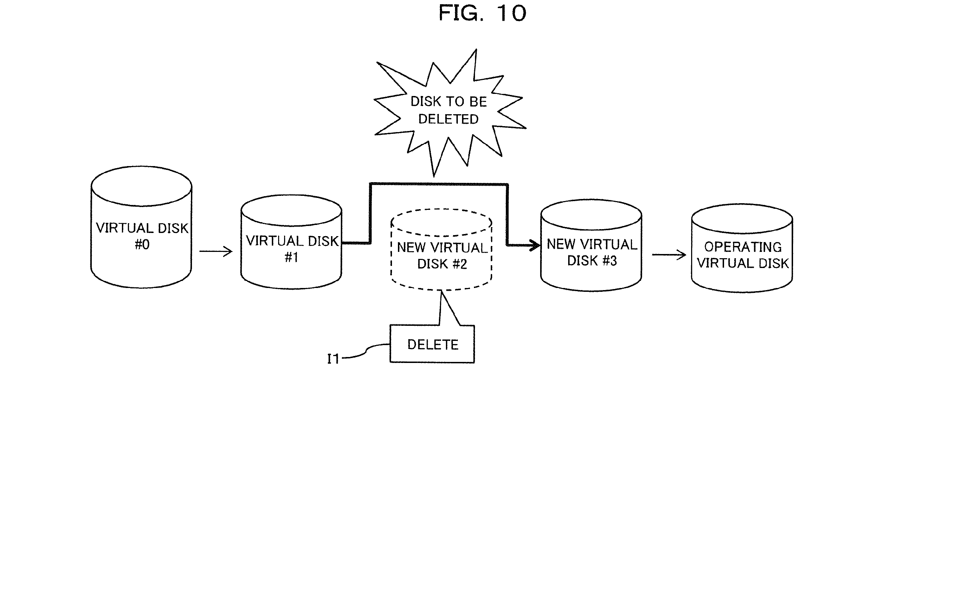

As illustrated in FIG. 10, the merging processor 115 deletes the virtual disk #2 (the previous virtual disk #3) (see step I1).

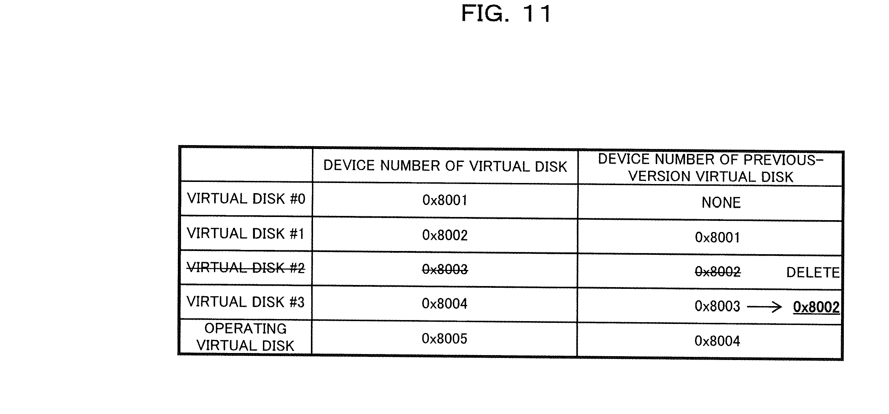

FIG. 11 is a diagram illustrating an example of a device number managing table used in the storage system according to an example of the first embodiment.

In the device number managing table of FIG. 11, the device number of each virtual disk is associated with the device number of the previous-version virtual disk. Since the virtual disk #0, which is the original disk, does not have the previous-version virtual disk, the virtual disk #0 has no device number of the previous-version device.

Except for the virtual disk #0, which is the original disk, the virtual disks stores the device numbers of the respective previous-version virtual disks in the respective management regions in the virtual disks.

Since the above two examples of the merging processing described with reference to FIGs. 2-10 delete the virtual disk #2, the device number of the virtual disk #2 and the device number of the previous-version virtual disk to the virtual disk #2 are deleted in the device number management table.

Accordingly, the merging processor 115 changes the device number of the previous-version virtual disk that the virtual disk #3 stores therein from "0x8003" representing the virtual disk #2 to "0x8002" representing the virtual disk #1.

### (A-2) operation:

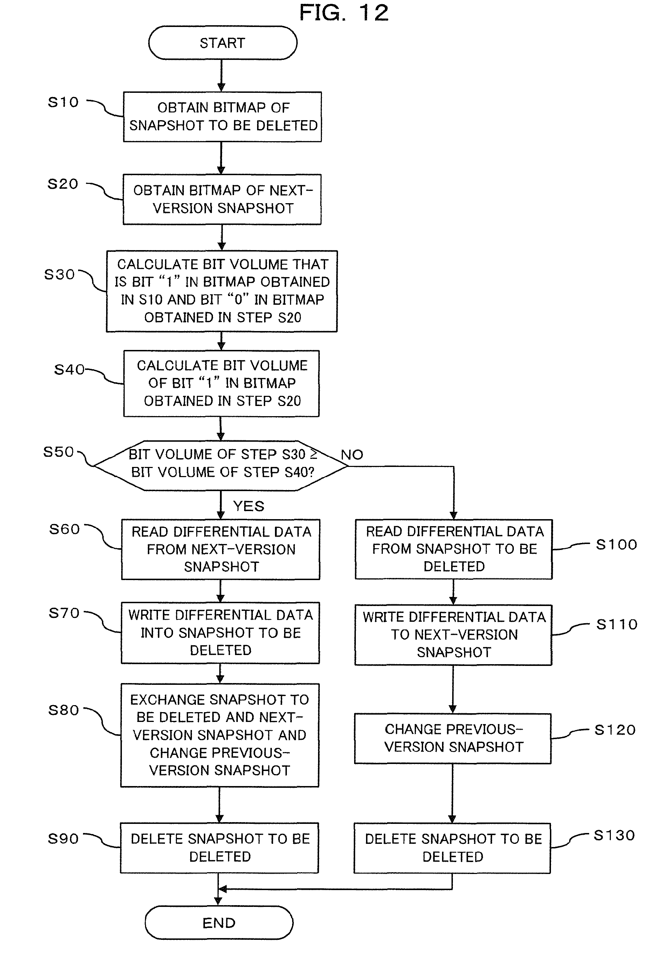

Description will now be made in relation to merging processing carried out in the storage system 1 having the above configuration according to an example of the first embodiment with reference to the flow diagram (steps S10-S130) of FIG. 12.

The obtaining processor 111 obtains (generates) the updated bitmap 42 based on the differential data managing map 41 of a snapshot that is to be deleted (step S10).

Then, the obtaining processor 111 obtains (generates) the updated bitmap 42 based on the differential data managing map 41 of a snapshot (i.e., one-version later snapshot) of the next version of the snapshot to be deleted (step S20).

The first calculator 112 calculates a copy data volume from the snapshot to be deleted into the next-version snapshot on the basis of the updated bitmaps 42. Specifically, the first calculator 112 calculates the number of bits that are "1" in the updated bitmap 42 obtained in step S10 and also that are "0" in the updated bitmap 42 obtained in step S20 (step S30).

The second calculator 113 calculates the copy data volume from the next-version snapshot into the snapshot to be deleted on the basis of the updated bitmap 42. Specifically, the second calculator 113 calculates the number of bits "1" in the updated bitmap 42 obtained in step S20 (step S40).

The determining processor 114 determines the direction of copying the differential data on the basis of the copy data volumes calculated in the steps S30 and S40. Namely, the determining processor 114 determines whether the bit number calculated in step S30 is the bit number calculated in step S40 or more (step S50).

When the bit number calculated in step S30 is the bit number calculated in step S40 or more (YES route in step S50), the determining processor 114 determines that the differential data of the next-version snapshot is to be copied into the snapshot to be deleted. Then the merging processor 115 reads the differential data that is updated in the next-version snapshot from the next-version snapshot (step S60). The merging processor 115 caches the read differential data into, for example, the memory 12.

The merging processor 115 writes the differential data read in step S60 into the snapshot to be deleted (step S70).

The merging processor 115 exchanges the snapshot (i.e., the merging destination) to be deleted with the next-version snapshot (i.e., the merging source), and changes the previous-version snapshot as detailed above with reference to FIG. 11 (step S80).

The merging processor 115 deletes the snapshot to be deleted (step S90) to finish the merging processing.

In contrast, when the bit number calculated in step S30 is less than the bit number calculated in step S40 (NO route in step S50), the determining processor 114 determines that the differential data of the snapshot to be deleted is to be copied into the next-version snapshot. Then the merging processor 115 reads the differential data that is updated in the snapshot to be deleted and that is not overwritten in the next-version snapshot from the snapshot to be deleted (step S100). The merging processor 115 caches the read differential data into, for example, the memory 12.

The merging processor 115 writes the read differential data into the next-version snapshot (step S110). Specifically, the merging processor 115 regards data being bits "1" in the updated bitmap 42 obtained in step S10 and being bits "0" in the updated bitmap 42 obtained in step S20 as the differential data (data needs to be copied) and writes the differential data into the next-version snapshot.

The merging processor 115 changes the previous-version snapshot to the snapshot serving as the merging destination (step S120).

The merging processor 115 deletes the snapshot to be deleted (step S130) to finish the merging processing.

### (A-3) effects:

As detailed above, the storage system 1 according to an example of the first embodiment efficiently carries out the merging processing on snapshots.

Specifically, the determining processor 114 determines a direction of copying a less data volume to be the direction of the merging processing, which can improve the throughput of deleting midcourse-version snapshots and also can reduce I/O load.

Furthermore, the determining processor 114 determines a direction of copying a less data volume to be the direction of the merging processing, which can reduce the copy data volume involved in the merging processing and therefore can also reduce time that the merging processing takes.

### (B) second embodiment:

### (B-1) system configuration:

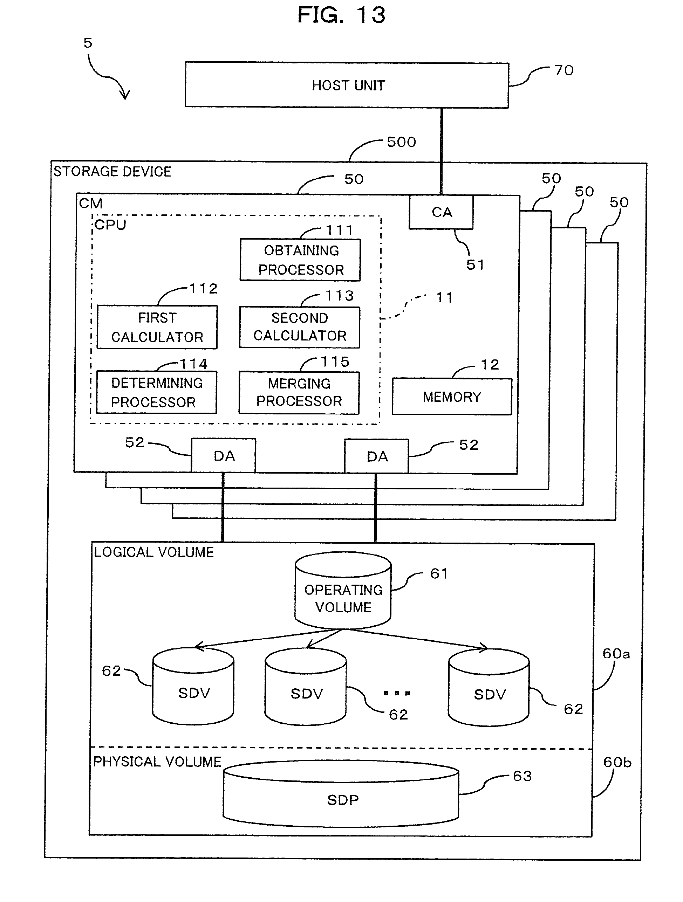

FIG. 13 is a diagram schematically illustrating the functional configuration of a storage system according to an example of the second embodiment.

As illustrated in FIG. 13, a storage system 5 of an example of the second embodiment includes a storage device 500 and a host 70, which are communicably connected to each other.

An example of the host 70 is a computer having a server function. The example of FIG. 13 includes a single host 70, but may be two or more hosts 70.

The storage device 500 includes multiple (four in the illustrated example) Control Modules (CMs; storage controllers) 50 and a physical volume 60b. Each CM 50 generates, for example, a logical volume 60a as depicted in FIG. 13 and associates the generated logical volume 60a with the physical volume 60b in any known manner to allow the host 70 to recognize the resource of the physical volume 60b.

The logical volume 60a includes an operating volume (operating disk) 61 and multiple Snap Data Volumes (SDVs) 62.

In an example of the second embodiment, the operating volume 61 serves as a copy source of a snapshot and the multiple SDVs 62 serve as copy destinations of a snapshot.

The physical volume 60b includes a Snap Data Pool (SDP; storing device) 63. Examples of the SDP 63 are an HDD or an SSD, which provides physical volumes allocatable to the operating volume 61 and the multiple SDVs 62.

A CM 50 is a controller that carries out various controls in accordance with a storage access request (an access control signal; hereinafter referred to as a host I/O) from the host 70. The CM 50 includes a Channel Adapter (CA) 51 and Device adapters (DAs) 52 in addition to the CPU 11 and the memory 12 as also included in the above first embodiment. In the example of FIG. 13, the storage device 500 includes four CMs 50, but the number of CMs 50 included in the storage device 500 is not limited to that in the illustrated in the embodiment. Alternatively, the storage device 500 may include three or less or five or more CMs 50.

The CA 51 is an interface controller that communicably connects the CM 50 with the host 70. The CA 51 receives data sent from the host 70 and passes the received data to the CM 50, and conversely sends the host 70 data received from the CM 50. This means that the CA 51 has a function of controlling data Input/Output (I/O) with the external host 70.

A DA 52 is an interface that communicably connects the CM 50 with the physical volume 60b, and is exemplified by a Fiber Channel (FC). A CM 50 reads and writes data from and into the physical volume 60b through the DAs 52. In the example of FIG. 13, a CM 50 includes two DAs 52, but the number of DAs 52 in a CM 50 are not limited to two. Alternatively, the CM 50 may include one, three or more DAs 52.

In an example of the second embodiment, the storage device 500 has a function of advanced copy that generates a snapshot rapidly without the aid of a non-illustrated CPU included in the host 70. The advanced copy function has a function of, for example, storing a difference between different versions of a snapshot in a disk.

The operating disk in an example of the above first embodiment is a differential disk of the latest version generated by the snapshot (differential snapshot) function while the operating disk generated by the snapshot function of an example of the second embodiment is the original disk (that stores therein data of all the segments). This means that the snapshot function of an example of the second embodiment evacuates data that is to be updated. The snapshot function of the above example of the first embodiment uses data of the previous-version disk when a read I/O directing a differential disk is issued whereas the snapshot function of an example of the second embodiment uses data of the later-version disk.

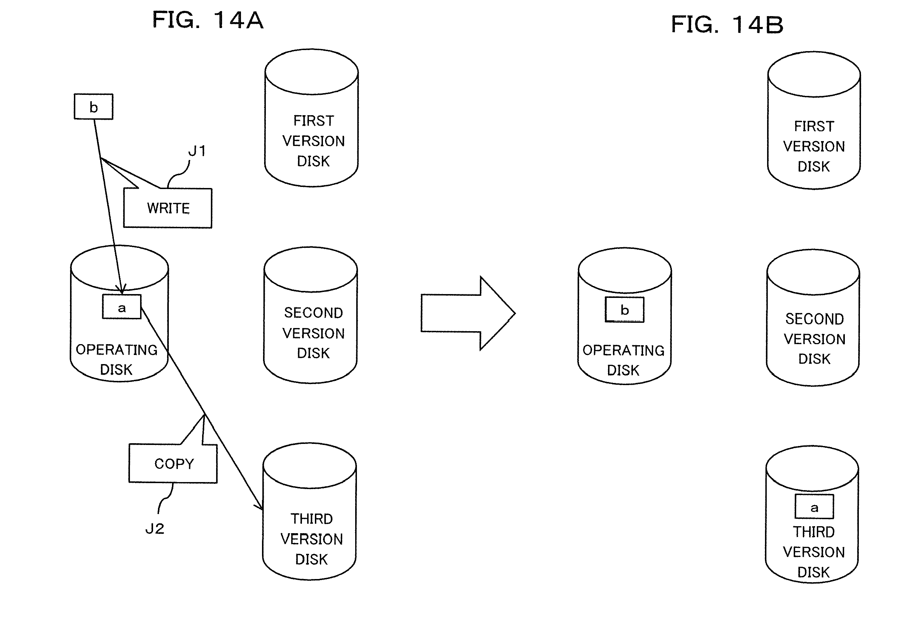

FIGs. 14A and 14B are diagrams illustrating a manner of generating a snapshot in a storage system of an example of the second embodiment, that is, a manner of updating data by means of a snapshot.

As illustrated in FIG. 14A, when a write I/O of data "b" into a segment of the operating disk which segment is storing data "a" is issued (see step J1 in FIG. 14A), the CM 50 copies the data "a" included in the operating disk into the third-version disk, which is the latest version (see step J2 in FIG. 14A). Consequently, as illustrated in FIG. 14B, the operating disk stores therein the data "b", which is overwritten with, and the third-version disk #3 stores therein the data "a" that has been stored in the operating disk.

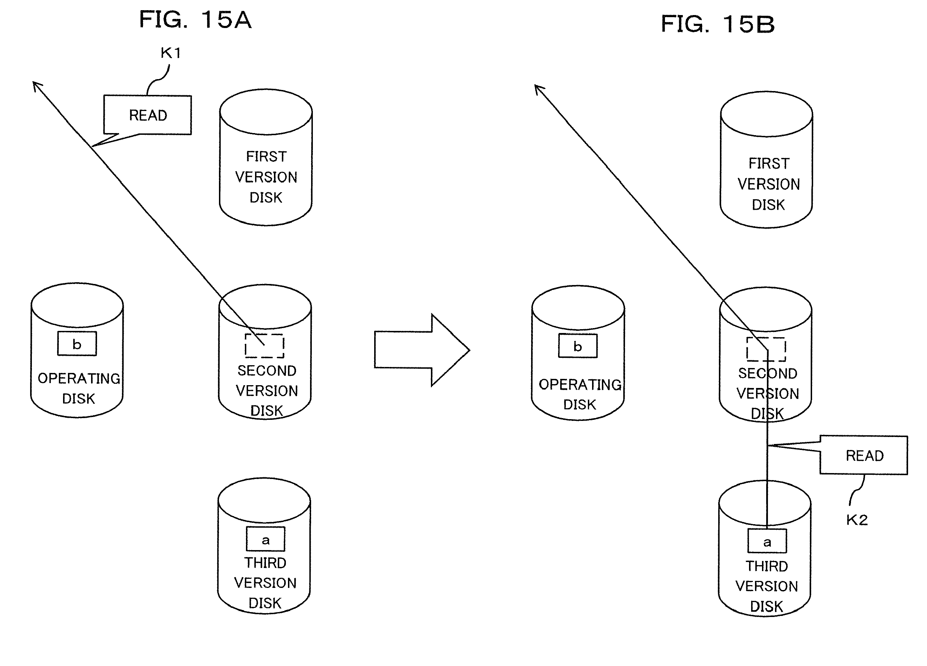

FIGs. 15A and 15B are diagrams illustrating a manner of reading a snapshot in the storage system of an example of the second embodiment, and in particular a manner of reading data from a snapshot.

As illustrated in FIG. 15A, when a read I/O is issued to the second-version disk (see step K1 in FIG. 15A), and the second-version disk does not store therein the data, the CM 50 reads the data from the third-version disk as illustrated in FIG. 15B (see step K2 in FIG. 15B).

In this snapshot function of an example of the second embodiment, since an older-version snapshot uses data stored in a newer-version snapshot, the newer-version snapshot is not able to be deleted while the older-version snapshot remains. In the example of FIGs. 15A and 15B, deletion of the third-version disk is not allowed when the first- or second-version disk is still present.

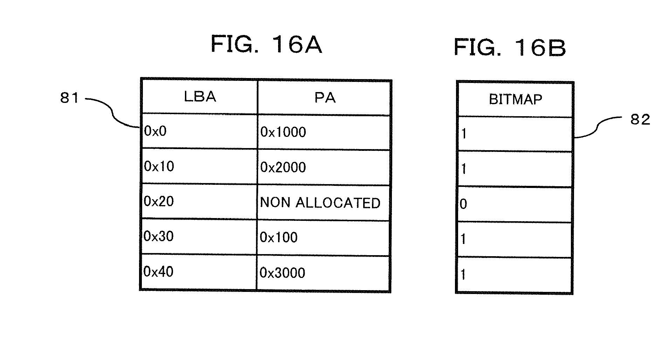

FIG. 16A is a diagram illustrating an LBA conversion table in a storage system of an example of the second embodiment; and FIG. 16B is a diagram illustrating an example of an updated bitmap in the storage system of an example of the second embodiment.

The snapshot function of an example of the second embodiment uses an SDV 62 described above as a copy destination of a snapshot.

An SDV 62 includes a LBA conversion table 81 as illustrated in FIG. 16A. The LBA conversion table 81 associates a Logical Block Address (LBA) at the time when the Copy-On-Write of the snapshot function is carried out with a Physical Address (PA).

Furthermore, each SDV 62 stores therein updated bitmap 82 as depicted in FIG. 16B. In the updated bitmap 82, a flag "1" that represents "being updated" is set for an LBA to which a PA is allocated in the LBA conversion table 81. In contrast, a flag "0" that represents "not being updated" is set for an LBA to which a PA is not allocated in the LBA conversion table 81.

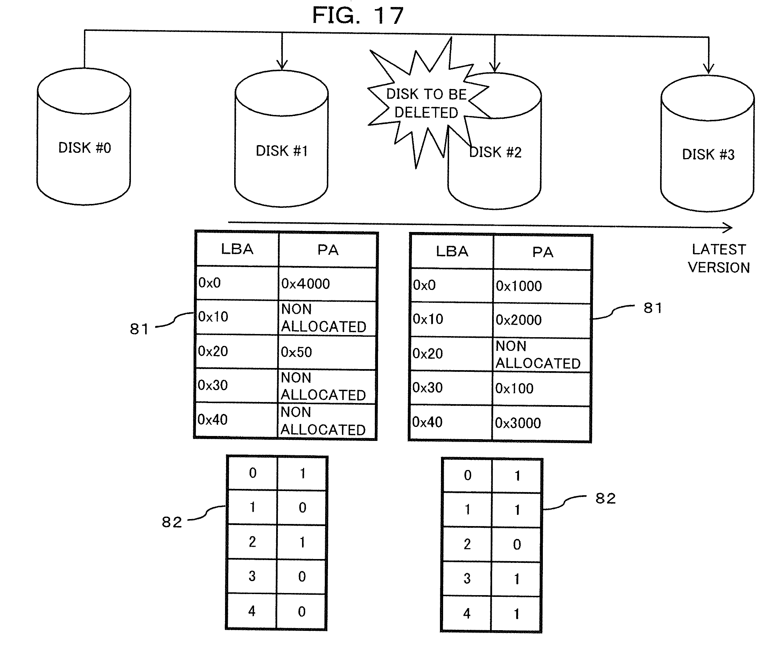

FIG. 17 is a diagram illustrating an example of merging processing in a storage system of an example of the second embodiment.

In the FIGs. 17-20, the disk #0 corresponds to the operating disk (original disk), and the disks #1-#3 correspond to backup disks (snapshots). These backup disks are generated in the order of disks #1, #2, and #3 from the oldest.

As illustrated in FIG. 13, the CPU 11 includes the obtaining processor 111, the first calculator 112, the second calculator 113, the determining processor 114, and the merging processor 115 likewise the first embodiment. Hereinafter, description will now be described in relation to the detailed functions of the obtaining processor 111, the first calculator 112, the second calculator 113, the determining processor 114, and the merging processor 115 with reference to FIGs. 17-20.

In the example of FIG. 17, the disk #2, which is a midcourse-version snapshot, is assigned to be a disk to be deleted. A snapshot is deleted when, for example, the operator makes an action or a predetermined cyclic period has come.

The obtaining processor 111 obtains (generates) the updated bitmap 82 based on the LBA conversion table 81 of the disk #2 that is to be deleted. In the example of FIG. 17, since the LBAs to which PAs are allocated in the LBA conversion table 81 of the disk #2 are 0x0, 0x10, 0x30, and 0x40, the obtaining processor 111 sets a flag "1" for the zeroth, first, third, and fourth bits in the updated bitmap 82, for example.

Furthermore, the obtaining processor 111 obtains (generates) the updated bitmap 82 based on the LBA conversion table 81 of the disk #1, which is the previous-version disk to the disk #2 to be deleted. In the example of FIG. 17, since the LBAs to which PAs are allocated in the LBA conversion table 81 of the disk #1 are 0x0 and 0x20, the obtaining processor 111 sets a flag "1" for the zeroth and second bits in the updated bitmap 82, for example.

The first calculator 112 calculates the copy data volume from the virtual disk #2 into the virtual disk #1 on the basis of the updated bitmaps 82. The copy data volume calculated here is data volume that is updated in the virtual disk #2 but that is not overwritten in virtual disk #1. Specifically, the first calculator 112 calculates the number of bits that are "1" in the updated bitmap 82 of the virtual disk #2 and that are "0" in the updated bitmap 82 of the virtual disk #1. In the example of FIG. 17, the first calculator 112 calculates three bits to be the copy data volume from the virtual disk #2 into the virtual disk #1.

Namely, the first calculator 112 calculates the number of segments that are updated in the first snapshot to be deleted among the multiple versions of a snapshot and that is not updated in the second snapshot of the successive version to the first snapshot, which the number is regarded as the first number of segments. In the illustrated example of the second embodiment, the second snapshot is one-version previous to the first snapshot.

The second calculator 113 calculates a copy data volume from the virtual disk #1 into the virtual disk #2 on the basis of the updated bitmap 82. The copy data volume calculated here is a data volume that is updated in the virtual disk #1. Specifically, the second calculator 113 calculates the number of bits that are "1" in the updated bitmap 82 of the virtual disk #1. In the example of FIG. 17, the second calculator 113 calculates two bits to be the copy data volume from the virtual disk #1 into the virtual disk #2.

Namely, the second calculator 113 calculates the number of segments updated in the second snapshot, which number is regarded as the second number of segments.

The determining processor 114 determines the direction of copying the differential data on the basis of the copy data volumes that the first calculator 112 and the second calculator 113 calculate. Specifically, when the copy data volume calculated by the first calculator 112 is the copy data volume calculated by the second calculator 113 or more, the determining processor 114 determines that the data in the disk #1 is to be copied into the disk #2. When the copy data volume calculated by the first calculator 112 is less than the copy data volume calculated by the second calculator 113, the determining processor 114 determines that the data in the disk #2 is to be copied into the disk #1.

Namely, the determining processor 114 determines, when the first number is the second number or more, that the second snapshot and the first snapshot are a merging source and a merging destination in merging processing, respectively, and determines, when the first number is less than the second number, that the first snapshot and the second snapshot are the merging source and the merging destination in merging processing, respectively.

In the example of FIG. 17, since the value (three bits) representing the copy data volume calculated by the first calculator 112 is more than the value (two bits) representing the copy data volume calculated by the second calculator 113, the determining processor 114 determines that the data in the disk #1 is to be copied into the disk #2.

The merging processor 115 reads data that takes bit "1" in the updated bitmap 82 of the disk #1 and writes the read data into the disk #2. Specifically, the merging processor 115 scans the LBA conversion tables 81 of the disks #1 and #2 from the respective tops and copies data on every LBA allocated a PA thereto in the LBA conversion table 81 of the disk #1 from the disk #1 into the disk #2.

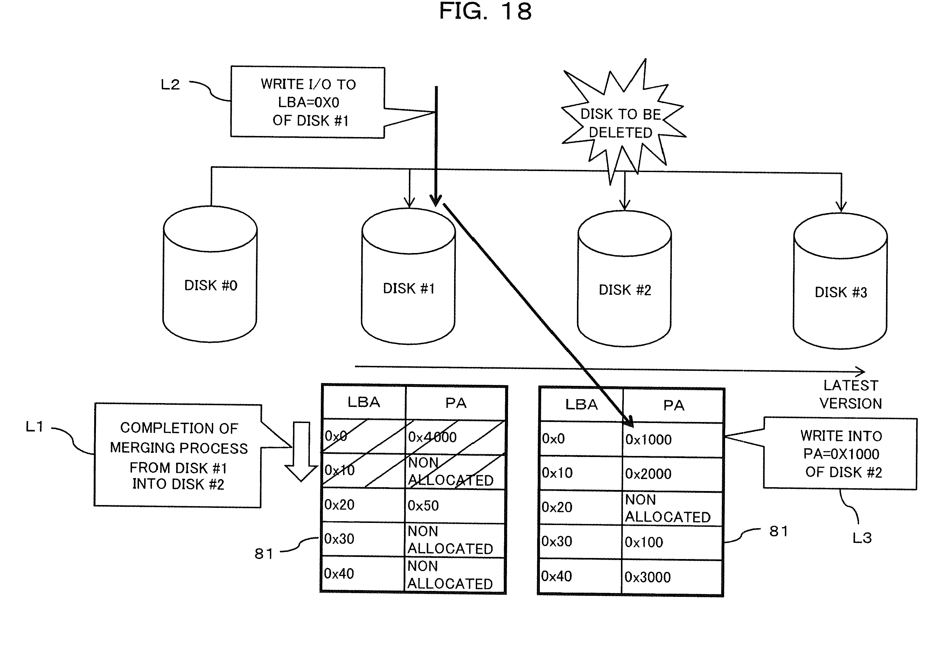

FIG. 18 is a diagram illustrating an example of a write process into a disk serving as a merging source being undergoing merging processing in the storage system according to an example of the second embodiment.

In the storage system 5, the disks #1-#3, which are backup disks, can be operated when being recognized by the host 70. When the host 70 issues an I/O directed to a block (segment) that has already been merged, the merging processor 115 reflects the I/O into the disk of the merging destination. In contrast, when the host 70 issues an I/O directed to a block that has not been merged yet, the merging processor 115 reflects the I/O into the disk of the merging source.

In the example of FIG. 18, the disk #1 is a merging source while the disk #2 is a merging destination; and the merging processing on the LBAs=0x0, 0x10 is already completed (see step L1). When the host 70 issues the write I/O directed to the LBA=0x0 of the disk #1 (see step L2), the merging processor 115 carries out the write process on the PA=0X1000 of the disk #2 (see step L3). Likewise, the host 70 issues a read I/O directed to the LBA=0x0 of the disk #1, the merging processor 115 carries out the read process on the PA=0x1000 of the disk #2.

When the determining processor 114 determines the first snapshot to be the merging destination of the merging processing, the merging processor 115 carries out data reading or writing that is directed to a segment of the second snapshot, the segment having already been merged into the first snapshot, on the first snapshot.

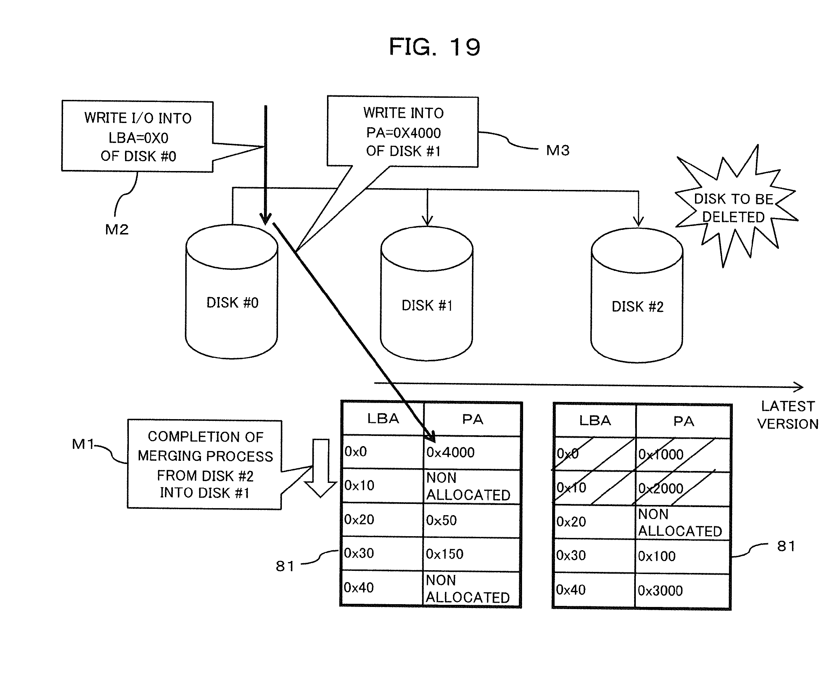

FIG. 19 is a diagram illustrating an example of a write process on the operating disk being undergoing merging processing in the storage system according to an example of the second embodiment.

As illustrated in FIG. 19, when the disk #2 is the latest-version disk, the backup data is reflected in (copied into) the disk #2 upon issue of a write I/O directed to the disk #0 serving as the original disk by means of Copy-On-Write. When the disk #2 is the latest-version disk and is the disk to be deleted and also when the block that the issued write I/O is directed to has already been merged, the merging processor 115 immediately reflects the updating data in the disk #1.

In the example of FIG. 19, the disk #1 is the merging destination; the disk #2 of the latest version is the merging source, and the LBAs=0x0, 0x10 have already been merged (see step M1). When the host 70 issues a write I/O directed to the LBA=0x0 of the disk #0 being the original disk (see step M2), the merging processor 115 carries out the write process on the PA=0x4000 of the disk #1 (see step M3).

When the write I/O is directed to a segment that has not been merged yet, the merging processor 115 reflects the updating data in the disk #2 because the updating data is to be reflected in the disk #1 in the course of the merging processing.

Namely, when the determining processor 114 determines the second snapshot to be the merging destination of the merging processing and the first snapshot is the latest-version snapshot, the merging processor 115 carries out data writing that is directed to a segment of the first snapshot, the segment having already been merged into the second snapshot, on the second snapshot.

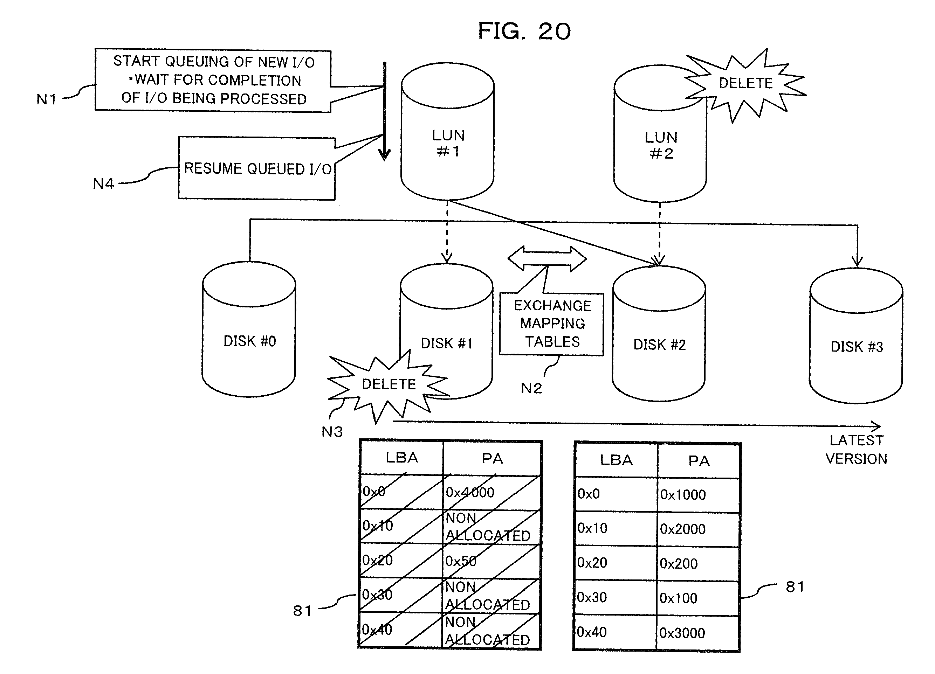

FIG. 20 is a diagram illustrating an example of a disk exchanging process in the storage system of an example of the second embodiment.

In the storage system 5 according to an example of the second embodiment, the non-illustrated storing device included in, for example, the CM 50 has a mapping table in which a Logical Unit Number (LUN, disk number) recognizable by the host 70 is associated with a logical volume number in the logical volume 60a.

In the example of FIG. 20, the disk #1 and the disk #2 are associated with LUN #1 and LUN #2, respectively. Here, the disks #0 and #3 are also associated with non-illustrated LUNs. The LUN #2 and the associated disk #2 are assigned to be the disks that are to be deleted. Referring to the LBA conversion tables 81 of the disks #1 and #2, the value representing the copy data volume from the disk #1 to the disk #2 is two bits and the value representing the copy data volume from the disk #2 to the disk #1 is three bits. For the above, the determining processor 114 determines that the disk #1 is the merging source and the disk #2 is the merge destination.

The merging processor 115 regards the disks #1 and #2 as the merging source and the merging destination, respectively, in obedience to the determination of the determining processor 114, and carries out the merging process accordingly.

Hereinafter, description will now be made in relation to a disk exchanging process after the completion of the merging processing by the merging processor 115 with reference to FIG. 20.

The merging processor 115 starts queuing of a new I/O that the host 70 directs to the LUN #1 and waits for response completion of another I/O being processed (see step N1).

The merging processor 115 exchanges the mapping tables (see step N2). Specifically, the merging processor 115 associates the LUN #1 with the merging-destination disk #2.

The merging processor 115 deletes the merging-souce disk #1 (see step N3).

The merging processor 115 resumes the I/O that the host 70 directs to the LUN #1 and that is queued (see step N4).

Namely, the merging processor 115 carries out the merging processing by writing data in the merging-source snapshot into the merging-destination snapshot and then deleting the merging-source snapshot.

### (B-2) operation:

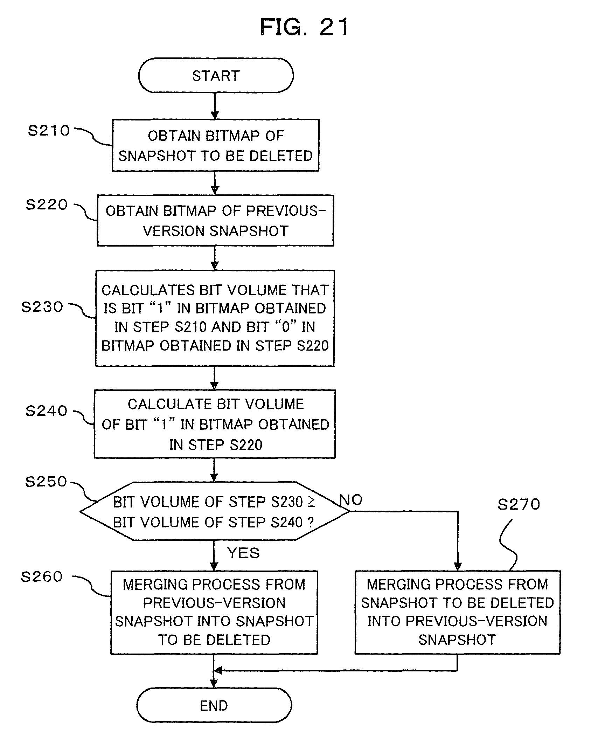

Description will now be made in relation to determining the merging direction in the storage system 5 having the above configuration according to an example of the second embodiment with reference to the flow diagram (steps S210-S270) of FIG. 21.

The obtaining processor 111 obtains (generates) the updated bitmap 82 based on the LBA conversion table 81 of a snapshot that is to be deleted (step S210).

Then, the obtaining processor 111 obtains (generates) the updated bitmap 82 based on the LBA conversion table 81 of a snapshot of the previous version to the snapshot to be deleted (step S220).

The first calculator 112 calculates a copy data volume from the snapshot to be deleted into the previous-version snapshot on the basis of the updated bitmaps 82. Specifically, the first calculator 112 calculates the number of bits that are "1" in the updated bitmap 82 obtained in step S210 and also that are "0" in the updated bitmap 82 obtained in step S220 (step S230).

The second calculator 113 calculates the copy data volume from the previous-version snapshot into the snapshot to be deleted on the basis of the updated bitmap 82. Specifically, the second calculator 113 calculates the number of bits that are "1" in the updated bitmap 82 obtained in step S220 (step S240).

The determining processor 114 determines the direction of copying the differential data on the basis of the copy data volumes calculated in the steps S230 and S240. Namely, the determining processor 114 determines whether the bit number calculated in step S230 is the bit number calculated in step S240 or more (step S250).

When the bit number calculated in step S230 is the bit number calculated in step S240 or more (YES route in step S250), the determining processor 114 determines that the data of the previous-version snapshot is to be copied into the snapshot to be deleted. Then the merging processor 115 carries out the merging processing from the previous-version snapshot to the snapshot to be deleted (step S260) to finish the procedure.

In contrast, when the bit number calculated in step S230 is less than the bit number calculated in step S240 (NO route in step S250), the determining processor 114 determines that the data of the snapshot to be deleted is to be copied into the previous-version snapshot. Then the merging processor 115 carries out the merging processing from the snapshot to be deleted to the previous-version snapshot (step S270) to finish the procedure.

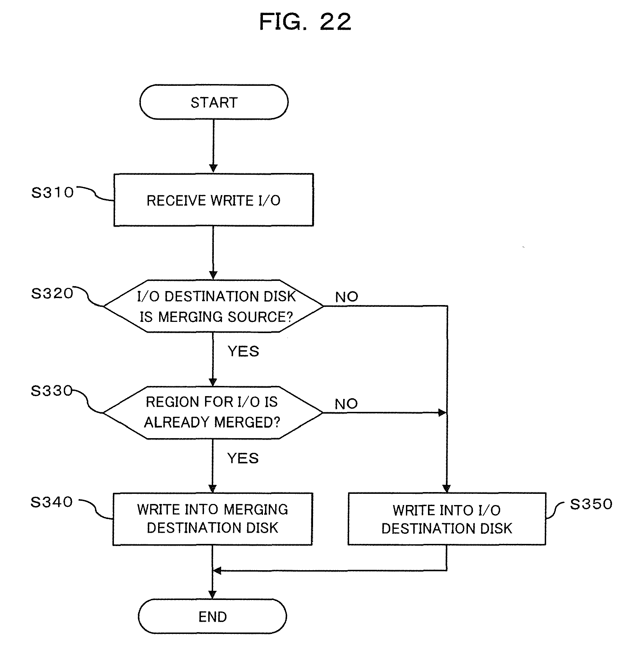

A write process performed during the merging processing in the storage system 5 according to an example of the second embodiment will now be described with reference to the flow diagram (steps S310 to S350) of FIG. 22.

The merging processor 115 receives a write I/O from the host 70 (step 310).

The merging processor 115 determines whether the disk of the I/O destination is the merging source (step S320).

If the I/O destination disk is the merging source (see YES route in step S320), the merging processor 115 further determines whether the region for the I/O is a block that has already been merged (step S330).

If the region for the I/O is a block that has already been merged (see YES route in step S330), the merging processor 115 writes data related to the write I/O into the merging-destination disk (step S340) to finish the procedure.

If the I/O destination disk is not the merge source (see NO route in step S320) or if the region for the I/O is not a block that has already been merged (see NO route in step S330), the procedure moves to step S350. Then, the merging processor 115 writes the data related to the write I/O into the I/O destination disk (step S350) to finish the procedure.

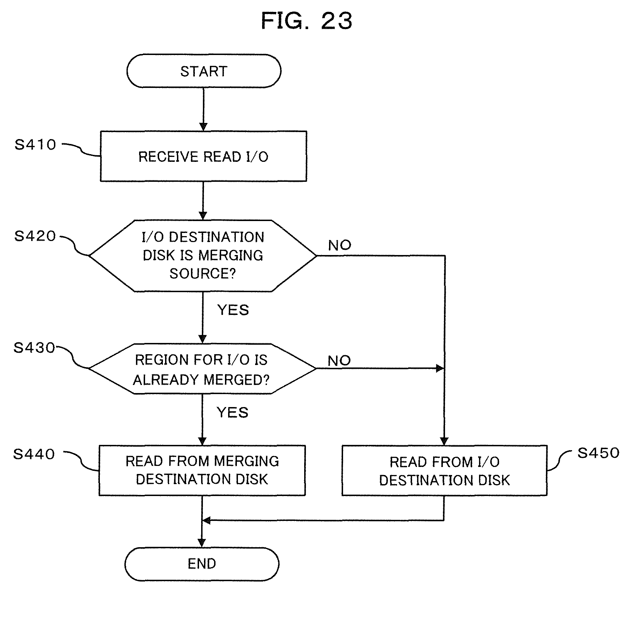

Next, description will now be made in relation to a read process performed during the merging processing in the storage system 5 according to an example of the second embodiment with reference to a flow diagram (steps S410-S450) of FIG. 23.

The merging processor 115 receives a read I/O from the host 70 (step S410).

The merging processor 115 determines whether the disk of the I/O destination is the merging source (step S420).

If the I/O destination disk is the merging source (see YES route in step S420), the merging processor 115 further determines whether the region for the I/O is a block that has already been merged (step S430).

If the region for the I/O is a block that has already been merged (see YES route in step S430), the merging processor 115 reads the data related to the read I/O from the merging-destination disk (step S440) to finish the procedure.

In contrast, if the I/O destination disk is not the merging source (see NO route in step S420) or if the region for I/O is not a block that has already been merged (see NO route in step S430), the procedure moves to step S450. Then the merging processor 115 reads the data related to the read I/O from the I/O destination disk (step S450) to finish the procedure.

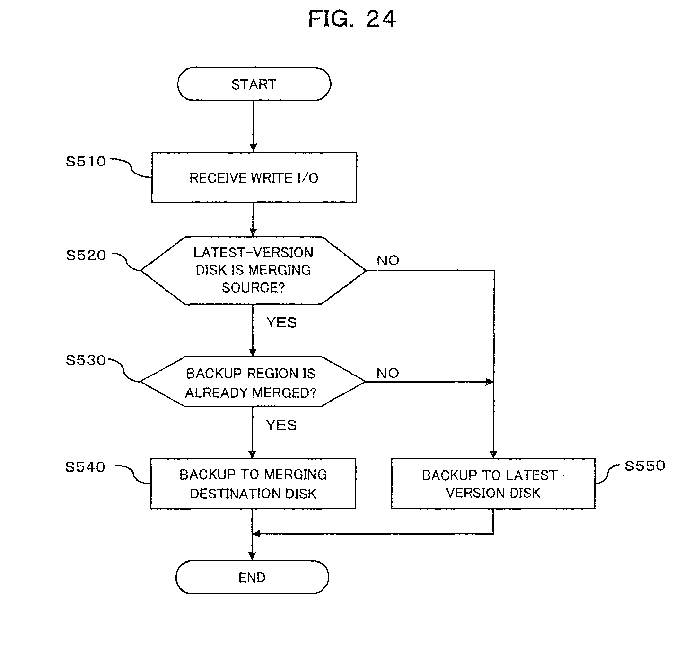

Description will now be made in relation to a write process on the operating disk being undergoing the merging process in the storage system 5 according to an example of the second embodiment with reference to the flow diagram (steps S510-S550) of FIG. 24.

The merging processor 115 receives a write I/O from the host 70 (step S510).

The merging processor 115 determines whether the latest-version disk is the merging source (step S520).

If the latest-version disk is the merging source (see YES route in step S520), the merging processor 115 further determines whether the backup region is a block having already been merged (step S530).

If the backup region is a block having already been merged (see YES route in step S530), the merging processor 115 writes the backup data into the merging destination disk (step S540) to finish the procedure.

If the latest-version disk is not the merging source (see NO route in step S520) or if the backup region is not a block having already been merged (see NO route in step S530), the procedure moves to step S550. Then the merging processor 115 writes the backup data into the latest-version disk (step S550) to finish the procedure.

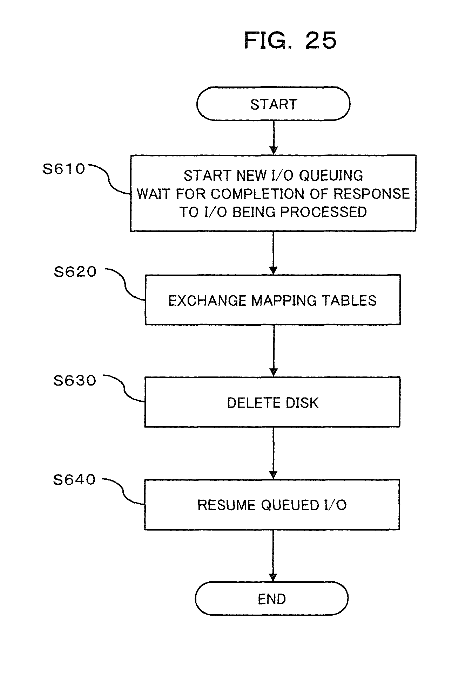

Next, description will now be made in relation to a disk exchanging process in the storage system 5 according to the second embodiment of the present invention with reference to the flow diagram (steps S610-S640) of FIG. 25.

The merging processor 115 starts queuing a new I/O issued from the host 70 and waits for response completion of another I/O being processed (step S610).

The merging processor 115 exchanges the mapping table that associates an LUN with a logical volume number (step S620).

The merging processor 115 deletes the merge-source disk (step S630).

The merging processor 115 resumes the I/O that has been issued from the host 70 and that has been queued (step S640) to finish the procedure.

### (B-3) effects:

As described above, the storage system 5 of an example of the second embodiment ensures the following effects in addition to the effects that the above first embodiment attains.

When the determining processor 114 determines the snapshot that is to be deleted to be the merging destination of the merging processing, the merging processor 115 carries out the I/O directed to a segment that has already been merged and that is included in the previous-version snapshot on the snapshot to be deleted. This allows the storage system 5 to deal with an I/O from the host 70 even while merge processing is being carried out, which can eliminate the requirement to halt the operation.

When the determining processor 114 determines the previous-version snapshot to be the merging destination of the merging processing and the snapshot to be deleted is the latest-version snapshot, the merging processor 115 carries out an I/O that is directed to a segment having already been merged and that is included in the snapshot to be deleted on the previous-version snapshot. This allows the storage device 500 to generate the backup of the operating disk even while the merging process is being carried out.

### (C) others:

The technique disclosed herein is by no means limited to the foregoing embodiment, and various changes and modifications can be suggested without departing from the sprit of the above embodiments. The respective configurations and procedurals steps of the embodiments may be selected, omitted, and combined according to the requirement.

## Claims

1. A storage controller that generates a plurality of versions of a snapshot of a storing device (21,63), the storage controller (10,50) comprising:
a first calculator (112) that counts a first number of segments that are updated in a first snapshot that is to be deleted among the plurality of versions of the snapshot but that are not updated in a second snapshot of a successive version to the first snapshot;
a second calculator (113) that counts a second number of segments that are updated in the second snapshot; and
a determining processor (114) that determines, when the first number is the second number or more, that the second snapshot and the first snapshot are a merging source and a merging destination in merging processing, respectively, and determines, when the first number is less than the second number, that the first snapshot and the second snapshot are the merging source and the merging destination in the merging processing, respectively, the merging source being merged into the merging destination.

2. The storage controller according to claim 1, further comprising a merging processor (115) that carries out the merging processing by merging data in the snapshot of the merging source into the snapshot of the merging destination and deleting the snapshot of the merging source.

3. The storage controller according to claim 1 or 2, wherein, when the plurality of versions of the snapshot are differential data from the respective previous versions, the second snapshot is one-version later than the first snapshot.

4. The storage controller according to claim 1, wherein, when the plurality of versions of the snapshot are evacuation of data to be updated, the second snapshot is one-version older than the first snapshot.

5. The storage controller according to claim 4, wherein, when the determining processor (114) determines the first snapshot to be the merging destination of the merging processing, the merging processor (115) carries out data reading or writing that is directed to a segment of the second snapshot, the segment having already been merged into the first snapshot, on the first snapshot.

6. The storage controller according to claim 4, wherein, when the determining processor (114) determines that the second snapshot to be the merging destination of the merging processing and also the first snapshot is the latest version, the merging processor (115) carries out data writing that is directed to a segment of the first snapshot, the segment having already been merged into the second snapshot, on the second snapshot.

7. A controlling program for causing a computer (11) included in a storage controller (10,50) that generates a plurality of versions of a snapshot of a storing device (21,63) to execute a controlling process comprising:
counting a first number of segments that are updated in a first snapshot that is to be deleted among the plurality of versions of the snapshot but that are not updated in a second snapshot of a successive version to the first snapshot;
counting a second number of segments that are updated in the second snapshot; and
determining, when the first number is the second number or more, that the second snapshot and the first snapshot are a merging source and a merging destination in merging processing,respectively,and determining,when the first number is less than the second number, that the first snapshot and the second snapshot are the merging source and the merging destination in the merging processing, respectively, the merging source being merged into the merging destination.

8. The controlling program according to claim 7, the controlling process further comprising carrying out the merging processing by merging data in the snapshot of the merging source into the snapshot of the merging destination and deleting the snapshot of the merging source.

9. The controlling program according to claim 7 or 8, when the plurality of versions of the snapshot are differential data from the respective previous versions, the second snapshot is one-version later than the first snapshot.

10. The controlling program according to claim 7 or 8, when the plurality of versions of the snapshot are evacuation of data to be updated, the second snapshot is one-version older than the first snapshot.

11. The controlling program according to claim 10, wherein the controlling process further comprises, when the first snapshot is determined to be the merging destination of the merging processing, carrying out data reading or writing that is directed to a segment of the second snapshot, the segment having already been merged into the first snapshot, on the first snapshot.

12. A method for controlling performed in a storage controller (10,50) that generates a plurality of versions of a snapshot of a storing device (21,63), the method comprising:
counting a first number of segments that are updated in a first snapshot that is to be deleted among the plurality of versions of the snapshot but that are not updated in a second snapshot of a successive version to the first snapshot;
counting a second number of segments that are updated in the second snapshot; and
determining, when the first number is the second number or more, that the second snapshot and the first snapshot are a merging source and a merging destination in merging processing,respectively,and determining,when the first number is less than the second number, that the first snapshot and the second snapshot are the merging source and the merging destination in the merging processing, respectively, the merging source being merged into the merging destination.

13. The method according to claim 12, further comprising carrying out the merging processing by merging data in the snapshot of the merging source into the snapshot of the merging destination and deleting the snapshot of the merging source.

14. The method according to claim 12 or 13, wherein, when the plurality of versions of the snapshot are differential data from the respective previous versions, the second snapshot is one-version later than the first snapshot.

15. The method according to claim 12 or 13, wherein, when the plurality of versions of the snapshot are evacuation of data to be updated, the second snapshot is one-version older than the first snapshot.
